# EUROPÄISCHE PATENTSCHRIFT

(11) **EP 0 832 452 B1**
(45) Veröffentlichungstag und Bekanntmachung des Hinweises auf die Patenterteilung: **09.12.1998**
(21) Anmeldenummer: 96917332.7
(22) Anmeldetag: 07.06.1996
(51) Int. Cl.: G06F 3/06

(54) **PERSONALCOMPUTER MIT MINDESTENS EINEM DISKETTENLAUFWERK**
PERSONAL COMPUTER WITH AT LEAST ONE FLOPPY DISK DRIVE
ORDINATEUR PERSONNEL AVEC AU MOINS UN LECTEUR DE DISQUETTES

(30) Priorität: 11.06.1995 DE 19520710
(43) Veröffentlichungstag der Anmeldung: 01.04.1998
(73) Patentinhaber: VOBIS MICROCOMPUTER AG, 52146 Würselen (DE); AWARD SOFTWARE INT., INC., Mountain View, CA 94043-4023 (US)
(72) Erfinder: YU, Hauwei Award Software Int., Inc., Mountain View, CA 94043 (US); BAUER, Wulf, Dr., D-50968 Köln (DE)
(74) Vertreter: Bauer, Wulf, Dr.
(86) Internationale Anmeldenummer: DE9601007
(87) Internationale Veröffentlichungsnummer: WO9700473

(56) Entgegenhaltungen:
- EP-A- 0 548 928
- US-A- 5 301 300

## Beschreibung

Die Erfindung bezieht sich auf einen Personalcomputer nach dem Oberbegriff des Patentanspruchs 1 sowie auf ein Verfahren zum Betreiben eines derartigen Personalcomputers nach dein Oberbegriff des Anspruchs 9.

Personal computer sind nach dem derzeitigen Stand generell mit mindestens einem Diskettenlaufwerk ausgestattet. Typische Diskettenlaufwerke sind heutzutage 3 1/2 Zoll-Laufwerke, es finden aber immer noch 5 1/4 Zoll-Laufwerke Verwendung und diese Laufwerke werden noch von Käufern von Personalcomputern gewünscht, teilweise beim Kauf eines neuen Personalcomputers bestellt, teilweise auch erst später nachgerüstet. Die Erfindung geht davon aus, daß ein Personalcomputer in der Regel mit einem 3 1/2 Zoll Laufwerk ausgerüstet ist und zumindest nachrüstbar sein sollte, wenn nicht gar schon ausgerüstet ist, mit entweder einem 5 1/4 Zoll-Laufwerk MF oder einem zweiten 3 1/2 Zoll-Laufwerk. Grundsätzlich kann nach der Erfindung die Bestückung des Personalcomputers mit Diskettenlaufwerken vom Typ 3 1/2 Zoll und 5 1/4 MF Zoll trei bestimmt und jederzeit geändert werden, ohne daß das BIOS-Programm mitgeändert werden muß.

Derzeit ist die absolut vorherrschende Konfiguration bei Laufwerken und Disketten ein 3 1/2 Zoll-Laufwerk und 1,4 MB-Disketten. Über die Disketten ist ein Import und Export von Daten und Programmen möglich, dieser Weg ist auch der derzeit am häufigsten genutzte. Ihm gegenüber treten andere Möglichkeiten der Eingabe und des Auslesens von Daten und Programmen, wie beispielsweise Wechselfestplatte, Datenübertragung über eine Schnittstelle und CD-ROM in den Hintergrund.

Der Personalcomputer und das Verfahren der eingangs genannten Art sind bekannt aus den europäischen Patenten 167 879 und 167 826. Das erstgenannte Patent betrifft eine Vorrichtung zur Feststellung, ob ein Laufwerk vorliegt, das 80 Spuren erfassen kann oder ob ein Laufwerk vorliegt, das lediglich 40 Spuren erfassen kann. Anders ausgedrückt wird auf doppelte oder einfache Spurbreite bzw. doppelten Schritt (bei 40 Spuren) und einfachen Schritt (bei 80 Spuren) geprüft. Hierzu wird der Lesekopf eines Diskettenlaufwerks auf eine Spur bewegt, die bei einem Typ Diskettenlaufwerk erreichbar ist, bei einem anderen aber nicht, beispielsweise auf die Spur 45. Durch anschließendes Rückbewegen zur Spur 0 hin, das schrittweise erfolgt, wird festgestellt, ob ein Laufwerk vorliegt, das 80 Spuren lesen kann oder ein solches, das nur 40 Spuren erfaßt. Ebenso arbeitet auch das zweitgenannte europäische Patent. Bei ihm kommt noch hinzu, daß ein erster Sensor abgefragt wird, der festzustellen gestattet, ob sich im Laufwerk überhaupt eine Diskette befindet und ein zweiter Sensor abgefragt wird, der mit der Klappe des Laufwerks verbunden ist und über den festgestellt wird, ob die Diskette seit dem letzten Zugriff möglicherweise ausgetauscht wurde.

Nachteilig ist in beiden Fällen, daß mechanische Bewegungen des Lesekopfes durchgeführt werden, um den Typ des Laufwerks festzustellen. Diese mechanischen Bewegungen machen sich als Geräusch bemerkbar, das man nach dem Start des Personalcomputers feststellen kann. Mechanische Bewegungen sind grundsätzlich einerseits zeitaufwendig, andererseits ist bei mechanischen Bewegungen immer das Risiko einer Abnutzung und eines Verschleißes gegeben, in diesem Fall des mindestens einen Diskettenlaufwerks.

Aus der Patentanmeldung EP-A-0 548 928 ist ein Personal Computer bekannt, bei dem, zur Feststellung, von welcher Art die Diskette in einem Diskettenlaufwerk ist, geprüft wird, ob bei der Diskette eine vorhandene Ausnehwung vorliegt oder nicht. Im ersten Fall wird eine erste Transferrate (500 kbit/s) gewählt, in zweiten Fall eine zweite Transferrate (250 kbit/s). Falls die gewählte Transferrate nicht zutreffend ist, wird dem Benutzer eine Fehlermeldung angegeben.

Die Erfindung hat es sich zur Aufgabe gemacht, den Personalcomputer der eingangs genannten Art und das Verfahren zu seinem Betreiben dahingehend weiterzubilden, daß zur Feststellung, welche Laufwerke angeschlossen sind und welche Disketten sich in ihnen befinden, eine mechanische Bewegung des Lesekopfes eines Diskettenlaufwerkes über mehrere Spuren nicht mehr notwendig ist und die Betriebsbereitschaft eines Computers nach seinem Start rascher hergestellt wird.

Gelöst wird diese Aufgabe durch den Personalcomputer nach dem Patentanspruch 1 sowie durch ein Verfahren nach Anspruch 9.

Erfindungsgemäß wird also ausschließlich durch Abfrage der Transferrate und durch die Prüfung, ob die bei 1,44 MB-Disketten vorhandene Ausnehmung nachweisbar ist oder nicht, festgestellt, welche Diskette und welches Laufwerk vorliegen.

Unter Personalcomputer werden dabei Tischgeräte (desk-top) der Standgeräte (tower) verstanden, die über einzelne Mehrfachsteckvorrichtungen mit einem Monitor und einer separaten Tastatur verbindbar sind. Das für diese Personalcomputer benutzte derzeitige BIOS-Programm unterstützt maximal zwei Diskettenlaufwerke. Gemäß der Erfindung sind diese entweder 3 1/2 Zoll-Laufwerke, die Disketten mit der Maximalkapazität von 720 KB, 1,44 MB oder 2,88 MB aufnehmen können, welche alle 80 Spuren pro Seite haben, oder 5 1/2 MF-Laufwerke, wobei MF für nur Multi-Funktion steht und bedeutet, daß diese Laufwerke sowohl Disketten mit 40 Spuren pro Seite als auch mit 80 Spuren pro Seite lesen können, diese Laufwerke sind für Disketten mit 360 KB oder 1,2 MB maximaler Speicherkapazität geeignet. Bei Angabe einer Speicherkapazität einer Diskette wird davon ausgegangen, daß eine Diskette auch auf niedrigere Speicherkapazität formatiert werden kann, nicht aber auf höhere. So kann beispielsweise eine 1,2 MB-Diskette auch für 360 KB formatiert werden.

Innerhalb der getroffenen Auswahl von Laufwerken und Disketten, wie sie beispielsweise im Patentanspruch 1 enthalten ist, ermöglicht die Ermittlung nur der Transferrate bereits eine weitgehende Zuordnung, es liegt lediglich bei einer Transferrate von 500 Kbit/s eine Zweideutigkeit vor, weil diese sowohl bei 3.5 Zoll-Laufwerken und 1.44 MB-Disketten als auch bei 5 1/4 Zoll-Laufwerken und 1,2 MB-Disketten vorliegt. Hier ermöglicht nun die Abfrage der Ausnehmung bei 1,44 MB-Disketten eine Unterscheidung, sodaß insgesamt eine ein-eindeutige Zuordnung möglich ist, also nach dem erfindungsgemäßen Verfahren eindeutig ermittelt werden kann, welches Laufwerk vorliegt und welche Diskette sich in ihm befindet.

Die Erfindung ist ausführbar für einseitige oder zweiseitige Disketten. Die Disketten können vom Typ DD, HD oder ED sein. Erfindungsgemäß wird davon ausgegangen, daß die Disketten formatiert sind.

Ein bedeutender, mit der Erfindung erreichter Vorteil liegt darin, daß beim Start eines Rechners gegenüber dem Stand der Technik Zeit und mechanische Bewegungen eingespart werden. Erfindungsgemäß wird beim Start lediglich abgefragt, ob null, eins oder zwei Diskettenlaufwerke elektrisch angeschlossen sind. Geprüft wird also lediglich, ob die Laufwerke A und B, auch als Laufwerke 0 und 1 bezeichnet, vorhanden sind. Dies kann beispielsweise über die BIOS-Funktion 15h des Interrupts 13h erfolgen, wobei in das DL-Register die Nummer des Diskettenlaufwerks, also 0 oder 1 eingegeben wird und das Carry-Flag abgefragt wird. Ist es 0 und ist im AH-Register die Angabe 0 enthalten, ist kein Diskettenlaufwerk angeschlossen. Bei anderen Inhalten des AH-Registers ist ein Laufwerk vorhanden. Alternativ hierzu kann im Interrupt 13h die Funktion 00h abgefragt werden, also ein Reset durchgeführt werden. Als Eingabe wird im AH-Register 00h eingegeben, im DL-Register 0 oder 1, je nach abgefragtem Diskettenlaufwerk. Ist das Carry-Flag als Antwort auf diese Eingabe 0, so bedeutet dies, dap die Operation ausgeführt wurde, also ein Laufwerk angeschlossen ist. Andere Abfragen zur Feststellung, ob elektrisch das Laufwerk 0 oder 1 angeschlossen ist, sind über andere BIOS-Funktionen möglich.

Für jedes aufgefundene Laufwerk wird ein bit im RAM-Speicher gesetzt, hierfür werden insgesamt zwei bit an Speicherraum benötigt. Wenn später, also nach dem Start, auf ein Laufwerk zurückgegriffen wird, wird stets abgefragt, ob das gesetzte bit vorhanden ist oder nicht. Die Abfrage eines Laufwerks wird gar nicht erst durchgeführt, wenn das angesprochene Laufwerk nicht vorhanden ist und in diesem Fall wird eine entsprechende Fehlermeldung ausgegeben.

Ist das Laufwerk jedoch vorhanden, so wird der zweite, zweistufige Schritt nach dem Kennzeichen des Patentanspruchs 1 durchgeführt, also nach Versuch und Irrtum eine Transferrate angesetzt und versucht, Daten von einer im Laufwerk befindlichen Diskette zu lesen und die Ausnehmung einer 1,44 MB-Diskette abgefragt. Aus beiden Informationen ist eine eindeutige Zuordnung zu den insgesamt fünf möglichen Konstellationen, wie sie in Anspruch 1 aufgelistet sind, möglich. Dabei wird über die Transferrate allein bereits für drei der fünf Fälle eine eindeutige Zuordnung erreicht, nur bei einer Transferrate von 500 Kbit/s sind zwei Konstellationen möglich und wird über die Abfrage der Ausnehmung in 1,44 MB-Disketten zwischen den beiden Alternativen entschieden.

Die aufgefundenen Informationen während des ersten Schritts (beim POST) über die Laufwerke und während des zweiten Schritts (beim Zugriff auf ein Laufwerk) werden im RAM Speicher abgespeichert. Dies erfolgt außerhalb der vom BIOS hierfür vorgehenen Adressen. Zusätzlich kann die Abspeicherung auch unter den Adressen, die im BIOS dafür vorgesehen sind, erfolgen.

Es ist möglich, entweder die Abfrage der Transferrate oder die Abfrage der Ausnehmung voranzustellen und dann die andere Abfrage durchzuführen. Die Reihenfolge, in der die beiden Abfragen durchgeführt werden, ist beliebig.

Da bei den derzeit hergestellten Personalcomputern das Laufwerk A in der überwiegenden Anzahl der Fälle einerseits vorhanden ist und andererseits ein 3 1/2 Zoll-Laufwerk ist und weiterhin die dafür verwendeten Disketten in der überwiegenden Anzahl der Fälle 1,44 MB-Disketten sind, kann durch Abfrage der Ausnehmung zunächst dieser Zustand, also diese Konstellation abgefragt werden. Gegenüber dem derzeitigen Stand der Technik, bei dem mit einem relativ unwahrscheinlichen Typ Diskettenlaufwerk und einer entsprechenden Art Diskette die Abfrage begonnen wird, wird erheblich Zeit gespart. Darüberhinaus kann im Gegensatz zum Verfahren nach dem Stand der Technik die jeweils vorherrschende Konstellation geändert werden. Stellt sich also beispielsweise heraus, daß eine 2,88 MB-Diskette in einem 3 1/2 Zoll-Laufwerk vorherrschender Standard wird, so kann auf diese Konstellation zunächst zurückgegriffen werden. Grundsätzlich gilt, daß die anderen Konstellationen, die nicht die vorherrschenden sind, in der Priorität entsprechend ihrer jeweiligen Verbreitung angeordnet werden. Auf diese Weise führt das erfindungsgemäße Verfahren in der Mehrzahl der Fälle auch dann, wenn nicht die vorherrschende Konstellation vorliegt, relativ rasch zu einer Auskunft über die tatsächlich vorliegende Konfiguration.

Wenn von einer Diskette, beispielsweise einer 1,44 MB-Diskette gesprochen wird, so wird dabei davon ausgegangen, daß die Diskette auch mit ihrer angegebenen Speicherkapazität benutzt wird. Im Rahmen der Erfindung ist es allerdings möglich, daß die Diskette mit niedrigerer Speicherkapazität formatiert ist, im gegebenen Beispiel also für 720 KB. Im Rahmen der Erfindung wird nicht davon ausgegangen, daß die Diskette auch höher formatiert werden kann, obwohl das erfindungsgemäße Verfahren auch für das Lesen und Beschreiben von höher formatierten Disketten grundsätzlich anpaßbar ist.

Bei 1,44 MB-Disketten ist über die Ausnehmung bereits grundsätzlich bekannt, daß eine 1,44 MB-Diskette vorliegt, die sich dann auch notwendigerweise in einem 3 1/2 Zoll-Laufwerk befinden muß. Die Erfindung beschränkt sich für diesen Fall aber nicht darauf, lediglich die Ausnehmung abzufragen, sondern es wird auch noch die Transferrate geprüft, auch wenn diese in den allermeisten Fällen 500 Kbit/s betragen wird, anders ausgedrückt die 1,44 MB-Diskette auch tatsächlich auf 1,44 MB formatiert ist. Da aber diese Diskette auch auf 720 KB formatiert sein kann, reicht die Abfrage der Ausnehmung allein nicht aus, vielmehr würde sie im Beispiel zu einem falschen Ergebnis führen. Durch die zusätzliche Abfrage der Transferrate wird aber auch in dem (unwahrscheinlichen) Beispielfall die richtige Konstellation ermittelt.

Ebenso ist bei 2,88 MB-Disketten über deren anders positionierte Ausnehmung bekannt, daß eine 2,88 MB-Diskette vorliegt, die sich ebenfalls notwendigerweise in einem 3 1/2 Zoll-Laufwerk befinden muß. Auch hierbei beschränkt sich die Erfindung nicht darauf, lediglich diese Ausnehmung abzufragen, sondern es wird auch noch die Transferrate geprüft, auch wenn diese in den allermeisten Fällen 1 Mbit/s betragen wird, anders ausgedrückt die 2,88 MB-Diskette auch tatsächlich auf 2,88 MB formatiert ist. Da aber diese Diskette auch auf 1,44 MB oder 720 KB formatiert sein kann, reicht die Abfrage der Ausnehmung allein nicht aus, vielmehr würde sie in beiden Beispielen zu einem falschen Ergebnis führen. Durch die zusätzliche Abfrage der Transferrate von zunächst 500 Kbit/s und dann 250 Kbit/s wird in den beiden Beispielfällen die richtige Konstellation ermittelt.

Bei dem erfindungsgemäßen Verfahren wird davon ausgegangen, daß Disketten nur in den im Patentanspruch 1 angegebenen Formaten formatiert werden können, das BIOS ist entsprechend beschränkt. Sofern eine andersartige Formatierung über ein zusätzliches Programm oder mittels eines anderen Personalcomputers vorgenommen wird, ist ein Bearbeiten derartiger Disketten mit einem Computer, der nach dem erfindungsgemäßen Verfahren betrieben wird. nicht vorgesehen. Es kann allerdings ein zusätzlicher Treiber für derartige Sonderfälle bereitgestellt werden.

Wenn unmittelbar nach Start des Computers eine unformatierte Diskette in ein Laufwerk eingelegt wird mit dem Zweck, diese Diskette zu formatieren, ist der Typ des Diskettenlaufwerkes noch unbekannt. Hier kann nun auf die im CMOS bzw. einem anderen, nicht flüchtigen Speicher abgespeicherten Daten des sogenannten Set-up zurückgegriffen werden. Hierzu hat in einer vorteilhaften Weiterbildung das BIOS-Programm des Personalcomputers eine sogenannte "in-ROM" Set-up Routine, sodaß die im CMOS oder im nicht flüchtigen RAM-Speicher abgespeicherte Information über die Konfiguration aufgerufen, benutzt und geändert werden kann, ohne daß das System bootfähig ist.

In einer vorzugsweisen Weiterbildung ist als Standardwert im BIOS für das Laufwerk 0, also das Laufwerk A, abgespeichert die Konfiguration 3 1/2 Zoll und 1,44 MB-Diskette. Bei dem zuvor beschriebenen Problem des Formatierens einer unformatierten Diskette unmittelbar nach dem Start und bevor in dem Laufwerk eine bereits formatierte Diskette bearbeitet wurde, ist damit eine sofortige Formatierung möglich, sofern es sich um eine 3 1/2 Zoll-Diskette handelt.

Weiterhin hat es sich als vorteilhaft herausgestellt, als Standardwert von dem das BIOS für die Laufwerke ausgeht, beim Start (POST) des Computers die im CMOS bzw. nicht flüchtigen RAM-Speicher des Set-up enthaltenen Angaben über die Laufwerke zu übernehmen. In diesem Fall ist das erfindungsgemäße Verfahren nach wie vor vorgesehen, dient aber nur noch der Überprüfung und zur Feststellung der Diskette, die sich in einem Laufwerk befindet und wird nur dann zur Feststellung des Typs des Laufwerks herangezogen, wenn dies erforderlich ist, also ein Schreib- oder Lesefehler festgestellt wurde. Ein solcher Fehler kann auftreten, wenn zwischenzeitlich ein Laufwerk ausgetauscht wurde oder die Information über die Laufwerke im Set-up falsch ist.

In einer bevorzugten Ausführung der Erfindung wird vorgeschlagen, daß die nach dem erfindungsgemäßen Verfahren erhaltene Information über das mindestens eine Diskettenlaufwerk auch im Speicher des Set-up abgespeichert wird, dieser also gegebenenfalls entsprechend überschrieben wird oder der Benutzer zu seiner Änderung aufgefordert wird. Wenn beispielsweise gemäß Set-up das Laufwerk A ein 3 1/2 Zoll-Laufwerk sein soll, durch das erfindungsgemäße Verfahren aber festgestellt wird, daß das Laufwerk A ein 5 1/4 MF-Laufwerk ist, erfolgt entweder eine automatische Korrektur des Speichers des Set-up oder wird der Benutzer zur Korrektur aufgefordert. Damit ist im zugehörigen Speicher, also CMOS bzw. nicht flüchtiger RAM-Speicher, auch zugleich die Anzahl der angeschlossenen Laufwerke stets angegeben und kann diese Information beim Start des Personalcomputers ebenso wie die Information über das mindestens eine Laufwerk in den RAM-Speicher übernommen werden, in den das BIOS-Programm beim Start des Personalcomputers kopiert und von dem aus es ausgeführt wird.

In einer bevorzugten Ausführung der Erfindung werden die durch das erfindungsgemäße Verfahren erfaßten Informationen über das mindestens eine Laufwerk und die Art der zuletzt darin verarbeiteten Diskette im genannten ROM-Speicher, von dem das BIOS-Programm aus ausgeführt wird, abgespeichert. Die Angaben über die Diskette werden solange aufrechterhalten, bis das Signal "Diskette gewechselt" vorliegt. Wenn es vorliegt, werden die abgespeicherten Daten über die Diskette gelöscht und bei einem erneuten Zugriff auf dasselbe Laufwerk wird dann zunächst die Art der eingelegten Diskette abgefragt. Die beiden für das erfindungsgemäße Verfahren in Betracht kommenden Laufwerke sind jeweils mit einem Sensor ausgestattet, dem ein Signal liefert, wenn die Zugangsöffnung zum Diskettenschacht betätigt wurde und unabhängig hiervon wenn sich eine Diskette im Laufwerksschacht befindet.

Die Erfindung wird im folgenden anhand eines nicht einschränkend zu verstehenden Ausführungsbeispiels näher beschrieben und erläutert, hierzu wird auf die Zeichnung verwiesen. In dieser zeigen:
FIG. 1: Ein Blockdiagramm der wesentlichen Teile des Personalcomputers und
FIG. 2: eine Darstellung einer 1,44 MB-Diskette.

Im gesamten Text wird die Abkürzung B für byte verwendet. Unter x486 wird ein Prozessor 14 mit sogenannter Intel-Architektur (Intel ist ein eingetragenes Warenzeichen) verstanden, beispielsweise ein 80486 Prozessor 14. Weiterentwicklungen dieses Prozessors 14 sind beispielsweise der sogenannte PENTIUM Prozessor (PENTIUM ist ein eingetragenes Warenzeichen). Für die Weiterentwicklungen gilt, daß sie kompatibel zum Prozessor x486 sind. Prozessoren des Typs x486 werden von mehreren Firmen hergestellt.

In einem Gehäuse 10 ist eine Hauptplatine 12 angeordnet, auf ihr befindet sich ein Prozessor 14 des angegebenen Typs. Weiterhin ist ein ROM-Speicher 16 vorgesehen, in dem ein BIOS-Programm permanent abgespeichert ist. Darüberhinaus ist ein RAM-Speicher 18 vorgesehen, in den das BIOS-Programm während des Starts des Personalcomputers kopiert und von dem aus es ausgeführt wird. Im gezeigten Bespiel ist dieser Speicher 18 auch zugleich für die im Rahmen des Set-up-Programms abgespeicherten Daten zuständig, diese Aufgabe kann aber auch ein separater Speicher, der ebenfalls nicht-flüchtig ist, übernehmen.

In einen Steckplatz 20 ist ein Laufwerkskontroller 22 eingesteckt und mit zwei Diskettenlaufwerken 24 (vom Typ 3 1/2 Zoll) und 26 (von Typ 5 1/4 Zoll MF) verbunden. Andere Teile des Personalcomputers, beispielsweise ein Festplattenlaufwerk, Videokarte usw. sind hier nicht dargestellt, sie sind ansich bekannt. Angeschlossen sind ein Monitor 28 und eine Tastatur 30, um einen vollständigen Personalcomputer darstellen zu können.

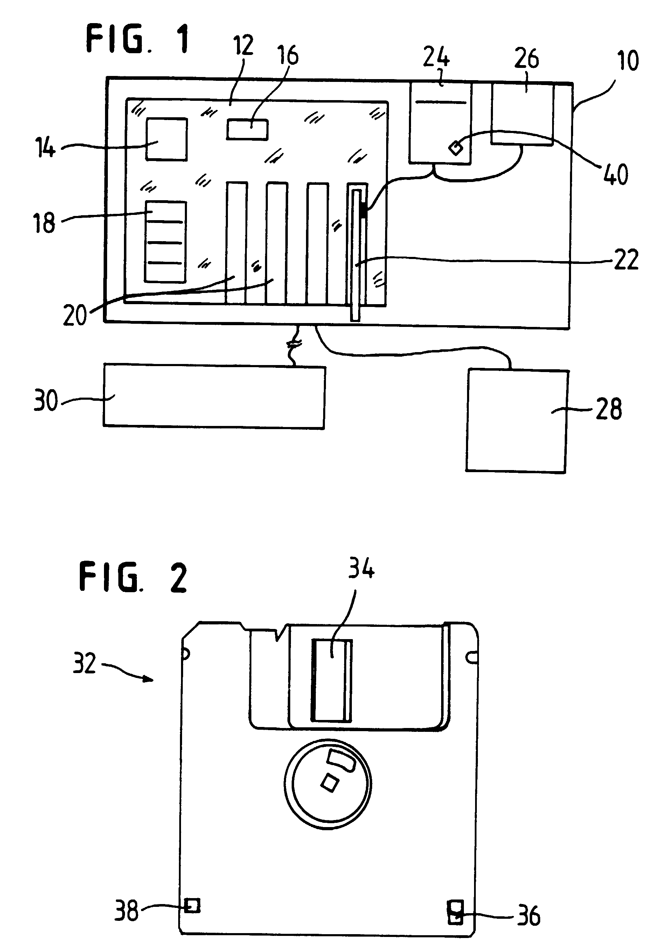

Figur 2 zeigt eine Draufsicht auf eine 1,44 MB-Diskette 32 im geöffneten Zustand ihres Schiebers, erkennbar ist der eigentliche Datenträger 34, der die Form einer flachen Scheibe hat und sich innerhalb des Gehäuses der Diskette 32 befindet. Einer als Schieber ausgebildeten Schreibschutzvorrichtung 36 gegenüberliegend befindet sich eine Ausnehmung 38, die für diese Art Diskette typisch ist. Sie ist bei 720 KB-Disketten nicht vorgesehen und bei 2,88 MB-Disketten an anderer Stelle angeordnet. Sie wird mittels einer Abtastvorrichtung 40 abgefragt, die sich im Diskettenlaufwerk 24 befindet.

Beim Start des Personalcomputers wird zunächst nur die Anzahl der angeschlossenen Diskettenlaufwerke abgefragt, hierzu können die oben erwähnten BIOS-Routinen eingesetzt werden. Im Beispielsfall sind zwei Diskettenlaufwerke 24, 26 angeschlossen, an einer speziellen Speicherstelle im RAM-Speicher 18 wird für jedes angeschlossene Diskettenlaufwerk ein bit gesetzt. Auf dieses greift das BIOS-Programm immer als allererstes zurück, wenn später, nach dem POST, auf ein Laufwerk zugegriffen werden soll.

Mit Abschluß des POST (power on self test) ist also lediglich bekannt, daß und wieviele Diskettenlaufwerke vorhanden sind. Wird nun auf ein Diskettenlaufwerk, beispielsweise das Laufwerk A mit der Bezugsziffer 24 zugegriffen, so wird zunächst in bekannter Weise geprüft, ob sich eine Diskette 32 im Laufwerksschacht befindet. Hierzu ist in bekannter Weise ein Sensor vorgesehen, der abgefragt wird. Nur wenn sich tatsächlich eine Diskette 32 im Laufwerk 24 befindet und für das betreffende Laufwerk 24 zudem auch das oben angesprochene bit gesetzt wurde, werden die folgenden Schritte durchgeführt:

Als Standardwert geht das BIOS-Programm davon aus, daß das Laufwerk A ein 3 1/2 Zoll-Laufwerk ist und daß es sich bei der eingelegten Diskette 32 um eine 1,44 MB-Diskette handelt. Der Standardwert über das Laufwerk kann entweder im Speicher des Set-up untergebracht und von dort als Standardwert übernommen werden, oder dieser Wert ist im BIOS-Programm als Standardwert von vornerein abgespeichert.

Als erstes wird geprüft, ob ein entsprechendes Signal der Abtastvorrichtung 40 vorliegt, also die Ausnehmung 38 einer 1,44 MB Diskette vorhanden ist. Ist dies der Fall, muß es sich bei dem Laufwerk um ein 3 1/2 Zoll-Laufwerk handeln und hat die in ihm befindliche Diskette eine maximale Kapazität von 1,44 MB. In einem zweiten Schritt wird das Laufwerk 24 nun in Bewegung gesetzt und es wird versucht, mit der zur Standardkonfiguration passenden Transferrate, also 500 Kbit/s Daten von der Diskette 32 zu lesen. Gelingt dies, ist die Konfiguration bekannt, nämlich eine 1,44 MB-Diskette, die auch entsprechende formatiert ist, in einem 3 1/2 Zoll-Laufwerk.

Das Lesen von Daten geschieht dabei über die in der Spur 0 enthaltenen Informationen, die während des Formatierens aufgebracht sind. Es wird ein sogenannter "read ID"-Schritt durchgeführt, beispielsweise mit dem Interrupt 13h. Funktion 02h.

Ist die Ausnehmung 38 nicht aufgefunden worden oder ist mit der angegebenen Transferrate ein Lesen von Daten nicht möglich gewesen, werden die anderen vier möglichen Konstellationen, wie sie im Patentanspruch 1 aufgelistet sind, durchgeprüft, und zwar in einer Reihenfolge, die der aktuellen Verbreitung dieser Konstellationen entspricht. So wird z. B. die Konstellation Diskette 360 KB und Laufwerk 5 1/4 Zoll MF als letzte Möglichkeit abgefragt. Diese Abfrage läuft nach den gängigen Regeln, wie sie auch bisher angewandt wurden, um ein automatisches Erkennen einer Konstellation zu ermöglichen: So wird zunächst, nachdem feststeht, daß die Ausnehmnung 38 nicht vorliegt, die Ausnehmung einer 2.88 MB Diskette mit der Abtastvorrichung 40 abgefragt und werden die Transferraten 1 Mbit/s, 500 Kbit/s und 250 Kbit/s nacheinander durchprobiert. Bei einem positivem read ID Ergebnis wird die Suche abgebrochen, da die Konstellation bekannt ist. Ansonsten wird die Suche weitergeführt.

In einer Alternative wird zunächst mit der Transferrate 500 Kbit/s begonnen und, wenn der read ID hiermit korrekte Ergebnisse liefert, dann erst die Ausnehmung 38 und danach - falls diese nicht vorhanden ist - die Ausnehmung einer 2,88 MB Diskette abgefragt. Wird eine dieser Ausnehmungen aufgefunden, ist die Konstellation (3 1/2 Zoll Laufwerk und 1,44 MB Diskette bzw. auf 1.44 MB formatierte 2,88 MB Diskette) bekannt. Wird keine Ausnehmung aufgefunden, liegt die Konstellation 5 1/4 Zoll Laufwerk und 1,2 MB Diskette vor. Ist die angesetzte Transferrate falsch, wird eine andere geprüft, z.B. 1 Mbit/s, dann 250 Kbit/s usw.

## Patentansprüche

1. Personalcomputer mit einer Hauptplatine, auf der ein Prozessor (14) vom Typ x486 oder eine Weiterentwicklung hiervon angeordnet ist, und der ein ROM Speicher (16) für ein BIOS-Programm und weiterhin ein RAM-Speicher (18), in den das BIOS-Programm beim Start des Personalcomputers kopiert und von dem es ausgeführt wird, zugeordnet ist, und mit mindestens einem Diskettenlaufwerk (24), das vom Typ 5 1/4 Zoll und mit der Fähigkeit, sowohl Disketten (32) mit 40, als auch mit 80 Spuren zu verarbeiten und/oder vom Typ 3 1/2 Zoll sein kann, dem ein Laufwerkskontroller (22) zugeordnet ist und das mechanisch und elektrisch lösbar mit den übrigen Teilen des Personalcomputers verbunden ist, dadurch gekennzeichnet, daß zur Feststellung, wie viele Diskettenlaufwerke (24, 26) insgesamt vorhanden sind, beim Start jeweils geprüft wird, wieviele Diskettenlaufwerke (24, 26) elektrisch angeschlossen sind und im RAM-Speicher (18) für jedes angeschlossene Laufwerk (24. 26) ein bit gesetzt wird und daß zur Feststellung, von welchem Typ das mindestens eine Diskettenlaufwerk (z.B. 24) ist und welche Art Diskette (32) sich in ihm befindet, zwei Abfragen durchgeführt werden, die in beliebiger Reihenfolge erfolgen können: a) es wird der Motor des Diskettenlaufwerks (z.B. 24) in Betrieb gesetzt, eine erste Transferrate für Daten pro Sekunde wird angesetzt und es wird versucht, mit dieser Transferrate von der Diskette (z.B. 32), die sich in dem angesprochenen Diskettenlaufwerk (24) befindet, Daten zu erfassen und für den Fall, daß diese Transferrate nicht zutreffend ist, wird eine zweite Transferrate usw. gewählt, bis die erste oder eine andere Transferrate ein korrektes Lesen von auf der Diskette (z.B 32) gespeicherten Daten ermöglicht und folgende Zuordnung getroffen:
| Transferrate | 500 Kbit/s | 1 Mbit/s | 250 Kbit/s | 500 Kbit/s | 300 Kbit/s |
|---|---|---|---|---|---|
| Diskette | 1,44 MB | 2,88 MB | 720 KB | 1,2 MB | 360 KB |
| Laufwerk | 3,5 | 3,5 | 3,5 | 5 1/4 MF | 5 1/4 MF |
und b) es wird geprüft, ob die bei 3 1/2 Zoll, 1,44 MB Disketten vorhandene Ausnehmung (38) vorliegt oder nicht, indem eine entsprechende Abtastvorrichtung (40) im 3 1/2 Zoll Laufwerk abgefragt wird, wobei dann, wenn das Signal dieser Abtastvorrichtung (40) vorliegt, ein Laufwerk 3 1/2 Zoll und eine Diskette mit einem maximalen Speichervermögen von 1,44 MB vorhanden ist und, wenn das Signal nicht vorliegt, eine andere innerhalb der anderen obengenannten fünf Konstellationen gegeben ist, die erfaßte Konstellation wird anschließend im RAM Speicher (18) des BIOS abgespeichert.

2. Personalcomputer nach Anspruch 1, dadurch gekennzeichnet, daß dann, wenn die Ausnehmung (38) einer 1,44 MB Diskette nicht vorliegt, geprüft wird, ob die anders positionierte Ausnehmung einer 3 1/2 Zoll, 2,88 MB Diskette mit der Abtastvorrichtung (40) erfaßbar ist.

3. Personalcomputer nach Anspruch 1, dadurch gekennzeichnet, daß die Abfrage mit dem Laufwerkstyp, z. B. 3 1/2 Zoll, und mit derjenigen Diskettenart, z. B. 1,4 MB, begonnen wird, die zum Zeitpunkt der Erstellung des Personalcomputers die am häufigsten verwendete Anordnung ist, daß anschließend auf die zweithäufigste Anordnung abgefragt wird usw.

4. Personalcomputer nach Anspruch 1 mit einem nicht flüchtigen Speicher für die Parameter des Personalcomputers, insbesondere der Diskettenlaufwerke (24, 26) und Disketten (32), vorzugsweise einem CMOS oder NVRAM-Speicher, dadurch gekennzeichnet, daß die Abfrage für das Laufwerk 0 mit den Parametern begonnen wird, die im genannten Speicher enthalten sind und ebenso die Abfrage für das Laufwerk 1 mit den Daten erfolgt, die im genannten Speicher enthalten sind.

5. Personalcomputer nach Anspruch 1, dadurch gekennzeichnet, daß die jeweils für das mindestens eine Diskettenlaufwerk (24, 26) ermittelte Konfiguration abgespeichert und bei einem späteren Zugriff auf dasselbe Diskettenlaufwerk (24, 26) die abgespeicherte Information benutzt wird, es sei denn, daß zwischenzeitlich ein Signal "Diskettenlaufwerk geöffnet" vorliegt, also das Diskettenlaufwerk geöffnet wurde.

6. Personalcomputer nach Anspruch 1, dadurch gekennzeichnet, daß bei 3 1/2-Zoll-Laufwerken die Abfrage, ob doppelte Spurbreite vorliegt oder nicht, unterbleibt.

7. Personalcomputer nach Anspruch 1, dadurch gekennzeichnet, daß die im Speicher des Set-up enthaltenen Informationen über die Laufwerke (24, 26) als Standardwert benutzt werden, mit denen die Abfrage über die Diskettenlaufwerke (24, 26) begonnen wird.

8. Personalcomputer nach Anspruch 1, dadurch gekennzeichnet, daß die erfindungsgemäß ermittelte Konfiguration über die Diskettenlaufwerke (24, 26) in den nicht flüchtigen Speicher des Set-up automatische oder aufgrund Aufforderung an den Benutzer übernommen werden.

9. Verfahren zum Betreiben eines Personalcomputers mit einer Hauptplatine (12), auf der ein Prozessor (14) vom Typ x486 oder eine Weiterentwicklung hiervon angeordnet ist, und der ein ROM-Speicher (16) für ein BIOS-Programm und weiterhin ein RAM-Speicher (18), in den das BIOS-Programm beim Start des Personalcomputers kopiert und von dem es ausgeführt wird, zugeordnet ist, und mit mindestens einem Diskettenlaufwerk (24), das vom Typ 5 1/4 Zoll und mit der Fähigkeit, sowohl Disketten mit 40, als auch mit 80 Spuren zu verarbeiten und/oder vom Typ 3 1/2 Zoll sein kann, dem ein Laufwerkskontroller (22) zugeordnet ist und das mechanisch und elektrisch lösbar mit den übrigen Teilen des Personalcomputers verbunden ist, dadurch gekennzeichnet, daß zur Feststellung, wie viele Diskettenlaufwerke (24, 26) insgesamt vorhanden sind, beim Start jeweils geprüft wird, wieviele Diskettenlaufwerke (24, 26) elektrisch angeschlossen sind und im RAM-Speicher (18) für jedes angeschlossene Laufwerk (24, 26) ein bit gesetzt wird und daß zur Feststellung, von welchem Typ das mindestens eine Diskettenlaufwerk (24, 26) ist und welche Art Diskette (32) sich in ihm befindet, zwei Abfragen durchgeführt werden, die in beliebiger Reihenfolge erfolgen können: a) es wird der Motor des Diskettenlaufwerks (24, 26) in Betrieb gesetzt, eine erste Transferrate für Daten pro Sekunde wird angesetzt und es wird versucht, mit dieser Transferrate von der Diskette (z.B 32), die sich in dem angesprochenen Diskettenlaufwerk (z.B 24) befindet, Daten zu erfassen und für den Fall, daß diese Transferrate nicht zutreffend ist, wird eine zweite Transferrate usw. gewählt, bis die erste oder eine andere Transferrate ein korrektes Lesen von auf der Diskette (z.B. 32) gespeicherten Daten ermöglicht und folgende Zuordnung getroffen:
| Transferrate | 500 Kbit/s | 1 Mbit/s | 250 Kbit/s | 500 Kbit/s | 300 Kbit/s |
|---|---|---|---|---|---|
| Diskette | 1,44 MB | 2,88 MB | 720 KB | 1,2 MB | 360 KB |
| Laufwerk | 3,5 | 3,5 | 3,5 | 5 1/4 MF | 5 1/4 MF |
und b) es wird geprüft, ob die bei 3 1/2 Zoll Disketten vorhandene Ausnehmung (38) vorliegt oder nicht, indem eine entsprechende Abtastvorrichtung (40) im 3 1/2 Zoll Laufwerk abgefragt wird, wobei dann, wenn das Signal dieser Abtastvorrichtung (40) vorliegt, ein Laufwerk 3 1/2 Zoll und eine Diskette (32) mit einem maximalen Speichervermögen von 1,44 MB vorhanden ist und, wenn das Signal nicht vorliegt, eine andere innerhalb der anderen obengenannten fünf Konstellationen gegeben ist, die erfaßte Konstellation wird anschließend im RAM Speicher (18) des BIOS abgespeichert wird.

10. Verfahren zum Betreiben eines Personalcomputers nach Anspruch 9 unter Verwendung eines Personalcomputers nach einem der Ansprüche 1 bis 8.

## Claims

1. A personal computer with a motherboard, onto which a processor (14) of the type x486 or a development of the same is arranged, and to which a ROM-storage (16) for a BIOS-program and furthermore a RAM-storage (18), into which the BIOS-program is copied at the start of the personal computer and from which it is operated, is allocated, and with at least one disk drive (24), which can be of the type 5 ¼ inch and with the capability to process disks (32) with 40 as well as 80 tracks and/or of the type 3 ½ inch, to which a drive control (22) is allocated and which is connected mechanically or electrically detachable with the other components of the personal computer, characterized by the fact that for stating how many disks drives (24, 26) exist altogether, it is tested each time at the start, how many disk drives (24, 26) are connected in an electric way and in the RAM-storage a bit is set for each connected drive (24, 26) and that for the statement, to which type the at least one disk drive (i.e. 24) belongs and which kind of disk is located in it, two scans are executed, which may occur in an arbitrary sequence: a) the motor of the disk drive (i.e. 24) is set into motion, a first transfer rate of data is set and the attempt is made to read data from this disk (i.e. 32), which is located in the mentioned disk drive (24) and in case this transfer rate is not suitable, a second transfer rate is chosen and so on, until the first or any other transfer rate enable a correct reading of the data, which is stored on the disk (i.e.32) and the following allocation is made:
| Transfer rate | 500 Kbit/s | 1 Mbit/s | 250 Kbit/s | 500 Kbit/s | 300 Kbit/s |
|---|---|---|---|---|---|
| Disk | 1,44 MB | 2,88 MB | 720 KB | 1,2 MB | 360 KB |
| Drive | 3,5 | 3,5 | 3,5 | 5 ¼ MF | 5 ¼ MF |
and b) it is tested, whether the recess (38), which exists with 3 ½ inch, 1,44 MB disks, exists or not, by scanning a respective scanning device (40) in the 3 ½ inch drive, whereas then if the signal of the scanning device (40) exists, a drive 3 ½ inch and a disk with a maximum storage capacity of 1,44 MB exist and, if the signal does not exist, any other of the other five constellations mentioned above is given, the registered constellation is then stored into the RAM-storage (18) of the BIOS.

2. The personal computer according to claim 1 characterized by the fact that in case that the recess (38) of a 1,44 MB disk does not exist, it is tested whether the recess of a 3 ½ inch, 2,88 MB disk, which is located differently, can be registered with the scanning device (40).

3. The personal computer according to claim 1 characterized by the fact that the scanning is started with the drive type 3 ½ inch for example, and with that kind of disk, 1,4 MB for example, which is the arrangement most frequently used at the time of the production of the personal computer, that after that the arrangement used the second frequented is scanned, and so on.

4. The personal computer according to claim 1 with a non-volatile storage for the parameter of the personal computer, especially the disk drives (24, 26) and the disks (32) preferably a CMOS or NVRAM-storage, characterized by the fact that the scanning for the drive 0 is started with the parameters, which are a part of the storage mentioned and also the scanning for the drive 1 occurs with the data, which are contained in the storage mentioned.

5. The personal computer according to claim 1 characterized by the fact that the configuration, which has been detected for the at least one disk drive (24, 26) each, is stored and with a later access onto the same disk drive (24, 26) the stored information is used, if no signal ,,disk drive opened" appears in the meantime, namely the disk drive has been opened.

6. The personal computer according to claim 1 characterized by the fact that with the 3 ½ inch drive the scanning is not performed with regard to the fact whether a double width of the track exists or not.

7. The personal computer according to claim 1 characterized by the fact that the information, which is contained in the storage of the set-up, about the drives (24, 26) are used as a standard value, with which the scanning via the disk drives is started.

8. The personal computer according to claim 1 characterized by the fact that the configuration, which has been detected according to the invention, via the disk drives (24, 26) in the non-volatile storage of the set-up is accepted automatically or is based on a response to the user.

9. The procedure for the operation of a personal computer with a motherboard, onto which a processor (14) of the type x486 or a development of the same is arranged, and to which a ROM-storage (16) for a BIOS program and furthermore a RAM-storage (18), into which the BIOS-program copies at the start of the personal computer and from which it is operated, is allocated, and with at least one disk drive (24), which can be of the type 5 ¼ inch and with the capability to process disks (32) with 40 as well as 80 tracks and/or of the type 3 ½ inch, to which a drive control (22) is allocated and which is connected mechanically or electrically detachable with the other components of the personal computer, characterized by the fact that for stating how many disks drives (24, 26) exist altogether, it is tested each time at the start, how many disk drives (24, 26) are connected in an electric way and in the RAM-storage a bit is set for each connected drive (24, 26) and that for the statement, to which type belongs the at least one disk drive (24) and which kind of disk is located in it, two scans are executed, which may occur in an arbitrary sequence: a) the motor of the disk drive (24) is set into motion, a first transfer rate of data is set and the attempt is made to register data from this disk (i.e. 32), which is located in the mentioned disk drive (24) and in case this transfer rate is not suitable, a second transfer rate is chosen and so on, until the first or any other transfer rate enable a correct reading of the data, which are stored on the disk (i.e.32) and the following allocation is made:
| Transfer rate | 500 Kbit/s | 1 Mbit/s | 250 Kbit/s | 500 Kbit/s | 300 Kbit/s |
|---|---|---|---|---|---|
| Disk | 1,44 MB | 2,88 MB | 720 KB | 1,2 MB | 360 KB |
| Drive | 3,5 | 3,5 | 3,5 | 5 ¼ MF | 5 ¼ MF |
and b) it is tested, whether the recess (38), which exists with 3 ½ inch , 1,44 MB disks, exists or not, by scanning a respective scanning device (40) in the 3 ½ inch drive, where then if the signal of the scanning device (40) exists, a drive 3 ½ inch and a disk with a maximum storage capacity of 1,44 MB exist and, if the signal does not exist, any other of the other five constellations mentioned above is given, the registered constellation is then stored into the RAM-storage (18) of the BIOS.

10. The procedure of the operation of a personal computer according to claim 9 by using a personal computer according to one of the claims 1 to 8.

## Revendications

1. Ordinateur individuel avec une carte principale à circuits imprimés (motherboard) sur laquelle est disposé un processeur (14) du type x486 ou un mode développé de celui-ci, et à laquelle est associée une mémoire ROM (16) pour un programme BIOS et de plus une mémoire RAM (18) dans laquelle le programme BIOS est copié lors de la mise en marche de l'ordinateur individuel et de laquelle ce programme est exécuté, et avec du moins un lecteur de disquettes (24) qui peut être du type 5 ¼ pouces et avoir la capacité de traiter aussi bien des disquettes (32) à 40 pistes que celles à 80 pistes, et/ou du type 3 ½ pouces, à ce lecteur est associé un contrôleur de lecteur (22) et il est connecté de manière amovible aussi bien mécaniquement que électriquement aux autres composants de l'ordinateur individuel, **caractérisé par le fait** que, pour constater le nombre total des lecteurs de disquettes (24, 26) existants, on vérifie respectivement lors de la mise en marche combien de lecteurs de disquettes (24, 26) sont connectés électriquement, et, dans la mémoire RAM (18), un bit est mis pour chaque lecteur connecté (24, 26), et que, pour constater quel est le type du lecteur de disquettes (par exemple 24) qui existe au moins et quel est le type de la disquette (32) qui se trouve dans celui-ci, on effectue deux balayages qui peuvent se faire dans n'importe quel ordre: a) le moteur du lecteur de disquette (par exemple 24) est mis en marche, un premier taux de transfert pour données par seconde est mis, et on essaie, avec ce taux de transfert, de saisir des données de la disquette (par exemple 32) qui se trouve dans le lecteur mentionné de disquettes (24), et, au cas où ce taux de transfert ne serait pas convenable, on choisit un deuxième taux de transfert et ainsi de suite, jusqu'à ce que le premier ou un autre taux de transfert permette une lecture correcte de données enregistrées sur la disquette (par exemple 32), et l'association suivante est faite:
| Taux de transfert | 500 Kbit/s | 1 Mbit/s | 250 Kbit/s | 500 Kbit/s | 300 Kbit/s |
|---|---|---|---|---|---|
| Disquette | 1,44 MB | 2,88 MB | 720 KB | 1,2 MB | 360 KB |
| Lecteur | 3,5 | 3,5 | 3,5 | 5 ¼ MF | 5 ¼ MF |
et b) on vérifie si l'évidement (38) existant dans le cas de disquettes à 3 ½ pouces, 1,44 MB existe ou non en balayant un dispositif correspondant de balayage (40) dans le lecteur 3 ½ pouces; si le signal de ce dispositif de balayage (40) existe, il y a un lecteur 3 ½ pouces et une disquette ayant une capacité maximale d'enregistrement de 1,44 MB, et, si le signal n'est pas présent, il y a une autre constellation se trouvant parmi les cinq autres constellations susmentionnées, la constellation saisie est ensuite enregistrée dans la mémoire RAM (18) du BIOS.

2. Ordinateur individuel selon la revendication 1, caractérisé par le fait que, si l'évidement (38) d'une disquette à 1,44 MB n'existe pas, on vérifie si l'évidement d'une disquette à 3 ½ pouces, 2,88 MB, qui est positionné différemment peut être enregistré au moyen du dispositif de balayage (40).

3. Ordinateur individuel selon la revendication 1, caractérisé par le fait que le balayage est commencé par le type de lecteur, par exemple 3 ½ pouces, et par le type de disquette, par exemple 1,4 MB, qui, au moment de la production de l'ordinateur individuel, est la disposition utilisée le plus souvent, que l'on balaie ensuite la disposition utilisée en second lieu etc.

4. Ordinateur individuel selon la revendication 1 avec une mémoire non volatile pour les paramètres de l'ordinateur individuel, en particulier des lecteurs de disquettes (24, 26) et disquettes (32), de préférence avec une mémoire CMOS ou NVRAM, caractérisé par le fait que le balayage pour le lecteur 0 est commencé par les paramètres qui sont contenus dans la mémoire mentionnée, et de même, le balayage pour le lecteur 1 est effectué avec les données qui sont contenues dans la mémoire mentionnée.

5. Ordinateur individuel selon la revendication 1, caractérisé par le fait que la configuration déterminée respectivement pour le lecteur de disquettes (24, 26) qui existe au moins est mémorisée et que, lors d'un accès effectué plus tard au même lecteur de disquettes (24, 26), l'information mémorisée est utilisée, si ce n'est qu'il y ait entretemps un signal "lecteur de disquette ouvert", que le lecteur de disquettes fût donc ouvert.

6. Ordinateur individuel selon la revendication 1, caractérisé par le fait que le balayage de savoir s'il y a une double largeur de piste ou non n'est pas effectué dans le cas de lecteurs 3 ½ pouces.

7. Ordinateur individuel selon la revendication 1, caractérisé par le fait que les informations sur les lecteurs (24, 26), qui sont contenues dans la mémoire du set-up sont utilisées en tant que valeurs standard par lesquelles le balayage sur les lecteurs de disquettes (24, 26) est commencé.

8. Ordinateur individuel selon la revendication 1, caractérisé par le fait que la configuration déterminée selon l'invention sur les lecteurs de disquettes (24, 26) est mémorisée dans la mémoire non volatile du set-up soit automatiquement soit en raison d'une invitation à l'utilisateur.

9. Procédé pour opérer un ordinateur individuel avec une carte principale à circuits imprimés (motherboard) (12) sur laquelle est disposé un processeur (14) du type x486 ou un mode développé de celui-ci, et à laquelle est associée une mémoire ROM (16) pour un programme BIOS et de plus une mémoire RAM (18) dans laquelle le programme BIOS est copié lors de la mise en marche de l'ordinateur individuel et de laquelle ce programme est exécuté, et avec du moins un lecteur de disquettes (24) qui peut être du type 5 ¼ pouces et avoir la capacité de traiter aussi bien des disquettes à 40 pistes que celles à 80 pistes, et/ou du type 3 ½ pouces, à ce lecteur est associé un contrôleur de lecteur (22) et il est connecté de manière amovible aussi bien mécaniquement que électriquement aux autres composants de l'ordinateur individuel, **caractérisé par le fait** que, pour constater le nombre total des lecteurs de disquettes (24, 26) existants, on vérifie respectivement lors de la mise en marche combien de lecteurs de disquettes (24, 26) sont connectés électriquement, et, dans la mémoire RAM (18), un bit est mis pour chaque lecteur connecté (24, 26), et que, pour constater quel est le type du lecteur de disquettes (24, 26) qui existe au moins et quel est le type de la disquette (32) qui se trouve dans celui-ci, on effectue deux balayages qui peuvent se faire dans n'importe quel ordre: a) le moteur du lecteur de disquette (24, 26) est mis en marche, un premier taux de transfert pour données par seconde est mis, et on essaie, avec ce taux de transfert, de saisir des données de la disquette (par exemple 32) qui se trouve dans le lecteur mentionné de disquettes (par exemple 24), et, au cas où ce taux de transfert ne serait pas convenable, on choisit un deuxième taux de transfert et ainsi de suite, jusqu'à ce que le premier ou un autre taux de transfert permette une lecture correcte de données enregistrées sur la disquette (par exemple 32), et l'association suivante est faite:
| Taux de transfert | 500 Kbit/s | 1 Mbit/s | 250 Kbit/s | 500 Kbit/s | 300 Kbit/s |
|---|---|---|---|---|---|
| Disquette | 1,44 MB | 2,88 MB | 720 KB | 1,2 MB | 360 KB |
| Lecteur | 3,5 | 3,5 | 3,5 | 5 ¼ MF | 5 ¼ MF |
et b) on vérifie si l'évidement (38) existant dans le cas de disquettes à 3 ½ pouces existe ou non en balayant un dispositif correspondant de balayage (40) dans le lecteur 3 ½ pouces; si le signal de ce dispositif de balayage (40) existe, il y a un lecteur 3 ½ pouces et une disquette (32) ayant une capacité maximale d'enregistrement de 1,44 MB, et, si le signal n'est pas présent, il y a une autre constellation se trouvant parmi les cinq autres constellations susmentionnées, la constellation saisie est ensuite enregistrée dans la mémoire RAM (18) du BIOS.

10. Procédé pour opérer un ordinateur individuel selon la revendication 9 en utilisant un ordinateur individuel selon l'une des revendications 1 à 8.
